Europäisches Patentamt

European Patent Office

Office européen des brevets

(19)

(11) Publication number: **0 064 351**
**B1**

# EUROPEAN PATENT SPECIFICATION

(45) Date of publication of patent specification: **21.08.85**

(51) Int. Cl.⁴: **B 64 D 43/00**

(21) Application number: **82302003.7**

(22) Date of filing: **19.04.82**

(54) Aircraft instrument systems.

(30) Priority: **05.05.81 GB 8113663**

(43) Date of publication of application:
**10.11.82 Bulletin 82/45**

(45) Publication of the grant of the patent:
**21.08.85 Bulletin 85/34**

(84) Designated Contracting States:
**DE FR GB IT SE**

(56) References cited:
**FR-A-2 458 463**

(73) Proprietor: **The Secretary of State for Defence in Her Britannic Majesty's Government of The United Kingdom of Great Britain and Northern Ireland Whitehall**
**London SW1A 2HB (GB)**

(72) Inventor: **Green, Roger Griffith**
**11 Silver Birches Way**
**Elstead Godalming Surrey GU8 6JA (GB)**

(74) Representative: **Lockwood, Peter Brian et al**
**Procurement Executive Ministry of Defence Patents 1 A (4) Room 2014, Empress State Building Lillie Road**
**London SW6 1TR (GB)**

Courier Press, Leamington Spa, England.

## Description

The present invention relates to aircraft instrument systems.

A conventional aircraft has in the forward view of a pilot a windscreen through which the pilot can view the outside world. Below the windscreen is a panel containing an instrument display. Some of the instruments in the display are present to allow the pilot to orientate the aircraft when his view of the outside world is insufficient for safe control of the aircraft. Others of the instruments, such as, for example, those displaying airspeed and engine temperatures, are present to allow the pilot to monitor flight and aircraft operational parameters of varying degrees of importance. In some (mainly military) aircraft certain of the instrument displays are repeated superimposed on the pilot's view of the outside world. Systems whereby this is achieved are known as Head Up Displays (HUD).

There are two basic modes of flight available to a pilot, namely visual flight and instrument flight. In the absence of a HUD a pilot's attention will be entirely directed towards visual flight (with occasional monitoring glances at instruments) or towards instrument flight. It is known to be dangerous to try to combine the two flight modes, though some degree of combination is possible and can occasionally be operationally acceptable with a HUD present.

In visual flight a pilot relies very much on the position, relative to himself and to his aircraft, of the horizon. An experienced pilot can control an aircraft within very close limits by viewing the horizon, with only infrequent reference to instruments. This allows the pilot to devote most of his attention to other piloting tasks such as, for example, navigation, radio communications, and avoidance of potential collision situations. Clearly, in instrument flight, that instrument in an instrument display which simulates the horizon will be of great importance to the pilot. Instruments simulating the horizon, such as known e.g. from FR—A—2458463, are of numerous types and have numerous names, but as the original instrument fulfilling this function was known as the artificial horizon this is the title which will be used in this specification when referring to any such instruments.

Human vision can be considered as consisting of two parts. These are focal (or central) vision, in which a person focusses his eyes on an object in his direct line of view, and ambient (or peripheral) vision, in which the person is aware of objects offset from the direct line of view. It has been found that in visual flight a pilot absorbs information regarding the horizon mainly from his ambient vision. The sizes of all known artificial horizons (in both HUD and instrument panel situations) are such that they can be viewed with focal vision only. As a result even a pilot experienced in instrument flying has to devote more of his attention to the artificial horizon (relative to the amount of attention devoted to the true horizon in visual flight), and reacts more slowly to undesired changes of aircraft attitude when indicated to him by the artificial horizon than when indicated by the true horizon.

According to the present invention an aircraft artificial horizon includes a light display situated in the ambient vision field of a pilot and extending round a substantial peripheral arc of that field, the light display having two colours and means for varying transition points of the two colours such that the transition points lie at all times on a line indicating the disposition of the true horizon.

One of the two colours may consist merely of no light at all, but preferably two active colours, for example blue and brown, are used. The light display might be formed, for example from a strip of light emitting diodes, and might be controlled from a switching unit driven in response to the display of a conventional artificial horizon.

In many aircraft the windscreen terminates at its rear end in a metallic frame. This frame usually lies in the ambient vision field of a pilot and can be used as a mounting for at least a part of the light display.

The artificial horizon will preferably include means whereby the pilot can adjust the position of the transition points. For example, the pilot may be required to align the points with the true horizon prior to take-off, and may subsequently wish to realign the points in accordance with adjustments of seat height.

One embodiment of the invention will now be described, by way of example only, with reference to the accompanying diagrammatic drawings, of which

Figure 1 is a side elevation of part of an aircraft including the cockpit,

Figure 2 is an end view in section along line II—II of Figure 1,

Figure 3 is a sketch of a light display and control unit, and

Figure 4 is an end view, in section, similar to Figure 2 but illustrating a different aircraft attitude.

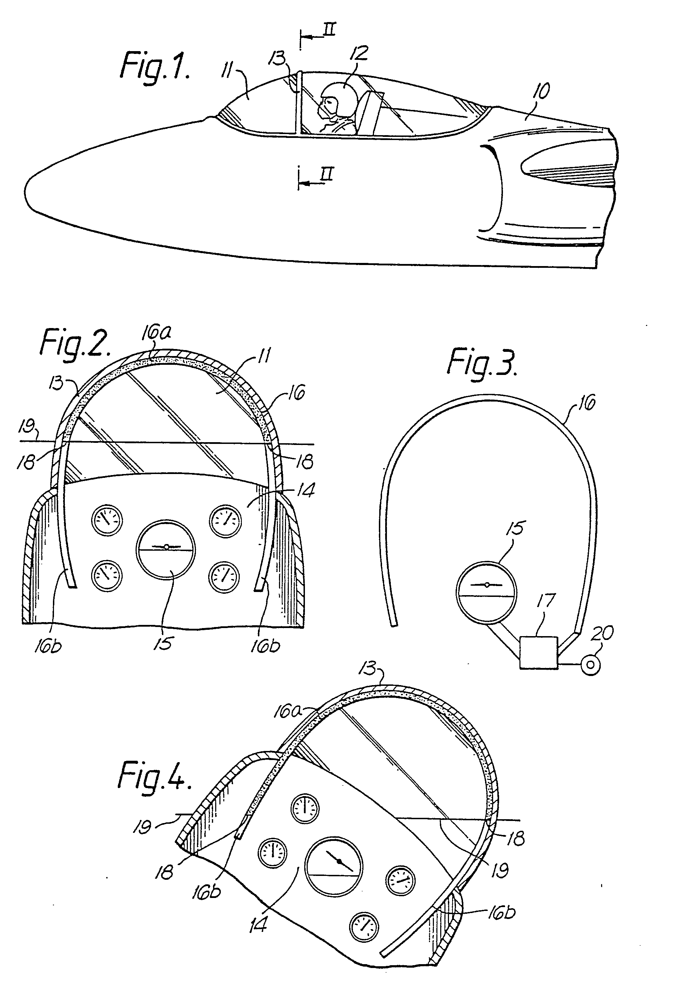

An aircraft 10 has a windscreen 11 situated in front of a pilot 12 (Figure 1). At the rear of the windscreen 11 is a frame 13 which lies in the ambient vision of the pilot 12. Below the windscreen 11 (Figure 2) is a panel 14 containing a display of instruments, such as an artificial horizon 15. Mounted on the frame 13, and entering some distance on to the panel 14, is a light display 16. The light display consists of a plurality of light emitting diodes so constituted and arranged that the display can show two colours, each colour being displayed individually in continuous strips such as those shown at 16a, 16b. Suitable colours might be blue for strip 16a and brown for strip 16b. The light display 16 is connected (Figure 3) to a switching unit 17 drivable in response to the display of artificial horizon 15. An alignment switch 20 allows the relative position of colour strips 16a, 16b, to be changed.

In use, the light display 16 is set up so that junctures 18 of the colour strips 16a, 16b are aligned with a true horizon 19, using the alignment switch 20. This alignment can usefully be carried out before take-off as one of the standard pilot checks. The switching unit 17 is then driven in response to the mechanism of the artificial horizon 15 to control the light display 16 to keep the junctures 18 aligned with the horizon 19 at all times, as illustrated in Figure 4 where the display indicates that the aircraft in which it is installed is in a climbing turn to starboard. With this arrangement, when the horizon 19 is invisible the pilot 12 gets a simulation in his ambient vision field, which is the field in which he is accustomed to assimilate information from horizon 19 in visual flight.

It will be realised that with the light display 16 as described very high angles of climb or of descent will be indicated by the displays 16 showing only one colour.

Whilst the colours have been described as blue and brown, other colours might be found to be more suitable, as giving greater contrast. In one embodiment one of the colours might be "black", corresponding to the light display's being switched off. Light display units other than light emitting diodes might be used.

The light display 16 has been described as being mounted on the frame 13, and this takes advantage of a feature of aircraft design which in other respects interferes with the pilot's vision. However, there may be no frame 13, or the frame 13 might subtend an arc of the pilot's ambient vision which is unsuitable for the invention. In such case the light display 16 can be mounted on, for example, the windscreen 11. Modern technology in the lighting and electrical supply fields is such that a display 16 so mounted could be designed to have minimal interference with the pilot's external view.

It will be recognized by those skilled in the art of flying and by those skilled in the art of artificial horizons that the true horizon 19 referred to in this specification is that horizon which would be seen by a pilot flying in good visibility over a flat landscape. This is the horizon which an artificial horizon designer must provide, and which an experienced pilot visualises by automatically mentally compensating for observed terrain contours.

## Claims

1. An aircraft artificial horizon characterised in having a light display (16) situated in an ambient vision field of a pilot and extending round a substantial peripheral arc of that field, the light display having two colours, and means for varying the transition points of the two colours such that the transition points (18) lie at all times on a line indicating the disposition of the true horizon (19).

2. An aircraft artificial horizon as claimed in Claim 1 wherein the light display is formed from a strip of light (16a, 16b) of light emitting diodes.

3. An aircraft artificial horizon as claimed in Claim 1 or in Claim 2 wherein the light display is controlled by a switching unit (17) driven in response to a display of a conventional artificial horizon (15).

4. An aircraft artificial horizon as claimed in any one of Claims 1 to 3 wherein the colours are active.

5. An aircraft artificial horizon as claimed in Claim 4 wherein the colours are blue and brown.

6. An aircraft artificial horizon as claimed in any one of Claims 1 to 5 wherein the light display (16) is mounted at least in part on a metallic windscreen frame.

7. An aircraft artificial horizon as claimed in any one of Claims 1 to 6 including means (20) whereby a pilot can adjust the position of the transition points.

## Revendications

1. Horizon artificiel pour aéronef, caractérisé en ce qu'il comporte un dispositif d'affichage lumineux (16) placé dans le champ de vision ambiante d'un pilote et disposé autour d'un arc périphérique important de ce champ de vision, le dispositif d'affichage lumineux ayant deux couleurs, et un dispositif destiné à faire varier les points de transition des deux couleurs de manière que ces points de transition (18) se trouvent toujours sur un axe indiquant la disposition de l'horizon vrai (19).

2. Horizon artificiel pour aéronef selon la revendication 1, dans lequel le dispositif d'affichage lumineux est formé d'une bande (16a, 16b) de diodes photo-émissives.

3. Horizon artificiel pour aéronef selon l'une des revendications 1 et 2, dans lequel le dispositif d'affichage lumineux est commandé par un ensemble de commutation (17) piloté en fonction d'un affichage d'un horizon artificiel classique (15).

4. Horizon artificiel pour aéronef selon l'une quelconque des revendications 1 à 3, dans lequel les deux couleurs sont actives.

5. Horizon artificiel pour aéronef selon la revendication 4, dans lequel couleurs sont bleue et marron.

6. Horizon artificiel pour aéronef selon l'une quelconque des revendications 1 à 5, dans lequel le dispositif d'affichage lumineux (16) est monté au moins en partie sur un châssis métallique du pare-brise.

7. Horizon artificiel d'aéronef selon l'une quelconque des revendications 1 à 6, comprenant un dispositif (20) permettant au pilote de régler la position des points de transition.

## Patentansprüche

1. Künstlicher Horizont für Flugzeuge, gekennzeichnet durch eine im Gesichtsfeld eines Piloten angeordnete und sich längs eines im wesentlichen peripheren Bogens dieses Felds erstreckende Lichtanzeigevorrichtung (16), die zwei Farben und Mittel zum Variieren des Übergangspunktes der beiden Farben aufweist, so daß die Übergangspunkte (18) zu jeder Zeit auf einer die Lage des realen Horizonts (19) anzeigenden Linie liegen.

2. Künstlicher Horizont nach Anspruch 1, dadurch gekennzeichnet, daß die Lichtanzeigevorrichtung einen Streifen (16a, 16b) aus lichtemittierenden Dioden aufweist.

3. Künstlicher Horizont nach Anspruch 1 oder 2, dadurch gekennzeichnet, daß die Lichtanzeige von einer Schalteinheit (17) gesteuert wird, die wiederum in Reaktion auf die Anzeige eines konventionellen künstlichen Horizonts (15) gesteuert wird.

4. Künstlicher Horizont nach einem der Ansprüche 1 bis 3, dadurch gekennzeichnet, daß die Farben aktive Farben sind.

5. Künstlicher Horizont nach Anspruch 4, dadurch gekennzeichnet, daß die Farben blau und braun sind.

6. Künstlicher Horizont nach einem der Ansprüche 1 bis 5, dadurch gekennzeichnet, daß die Lichtanzeigevorrichtung (16) wenigstens zum Teil auf einen Windschutzscheiben-Metallrahmen montiert ist.

7. Künstlicher Horizont nach einem der Ansprüche 1 bis 6, gekennzeichnet durch Vorrichtungen (20), mit denen der Pilot die Lage der Übergangspunkte einstellen kann.

Fig.1.

Fig.2.

Fig.3.

Fig.4.

1